# FASCICULE DE BREVET EUROPEEN

(11) **EP 1 686 552 B1**
(45) Date de publication et mention de la délivrance du brevet: **16.09.2009**
(21) Numéro de dépôt: 05290188.1
(22) Date de dépôt: 26.01.2005
(51) Int. Cl.: G08B 25/00, H04L 12/46, H04M 11/04, H04L 29/08

(54) **Procédé pour établir un appel d'urgence dans un réseau local informatique, terminal, passerelles et serveur pour la mise en oeuvre de ce procédé**
Verfahren zum Absetzen eines Notrufes in einem lokalen Informationsnetz, Endgerät, Netzübergänge und Servereinrichtung für ein solches Verfahren
Method for establishing an emergency call in a local area network, terminal, gateways and server for such a method

(43) Date de publication de la demande: 02.08.2006
(73) Titulaire: Alcatel Lucent, 75008 Paris (FR)
(72) Inventeur: Gass, Raymond, 67150 Bolsenheim (FR); Le Creff, Michel, 95450 Vigny (FR)
(74) Mandataire: Sciaux, Edmond

(56) Documents cités:
- EP-A- 1 435 707
- US-A1- 2002 085 538
- PATENT ABSTRACTS OF JAPAN vol. 2003, no. 12, 5 décembre 2003 (2003-12-05) & JP 2004 364017 A (RICOH CO LTD), 24 décembre 2004 (2004-12-24)

## Description

L'invention concerne l'acheminement d'un appel d'urgence dans un réseau local informatique. Dans les entreprises, il est de plus en plus courant d'utiliser un réseau local informatique pour acheminer des appels téléphonique sous la forme de paquets de données, en utilisant le protocole Internet comme protocole de réseau.

Un réseau local informatique peut être subdivisé en plusieurs réseaux virtuels permettant de définir des groupes de terminaux pouvant échanger des données entre eux, quelle que soit l'architecture physique du réseau. Il est possible aussi de restreindre ou d'interdire l'échange de données entre des terminaux appartenant à des groupes différents, pour des raisons de sécurité. On entend par réseau virtuel un sous-réseau qui est défini uniquement par des moyens logiques.

La norme IEEE 802.1 Q décrit comment définir des réseaux virtuels dans un réseau Ethernet. Selon un des procédés décrits dans cette norme, un terminal émet un paquet de données dans un réseau virtuel en associant une étiquette à ce paquet, cette étiquette étant constituée d'un identificateur de ce réseau virtuel. Mais une trame peut aussi bien appartenir à un réseau virtuel sans que cette trame n'ait une telle étiquette. Quand le paquet arrive sur un port d'un noeud du réseau local, ce noeud examine s'il contient un étiquette constituée d'un identificateur de ce réseau virtuel :
- S'il ne contient pas d'étiquette, le paquet est considéré comme venant d'un réseau virtuel prédéterminé qui correspond au port d'arrivé.
- S'il contient une étiquette, le paquet est considéré comme venant du réseau virtuel dont l'identité constitue cette étiquette.
Le noeud extrait en outre du paquet une adresse physique de destination. Puis le noeud achemine le paquet vers un noeud de sortie correspondant à cette adresse physique, si cela est permis compte tenu du réseau virtuel auquel appartient le paquet. Pour vérifier cela, le noeud regarde dans une table si cette adresse physique fait partie d'une liste prédéterminée d'adresses de terminaux accessibles par ce port de sortie, et appartenant à ce réseau. Si ce n'est pas le cas, le paquet n'est pas transmis plus loin.

Pour que le délai d'acheminement des paquets de voix ne dégrade pas la qualité des communications téléphoniques, il est nécessaire de créer au moins un réseau local virtuel pour utiliser des postes téléphoniques sur protocole Internet, dans un réseau local utilisé par ailleurs pour des transmissions de données ordinaires, entre des ordinateurs par exemple. Un tel réseau virtuel est appelé réseau virtuel voix, et il permet de traiter en priorité les paquets de voix échangées par les terminaux téléphoniques : ces terminaux téléphoniques accèdent par ailleurs à des serveurs spécifiques pour les services téléphoniques, et les paquets de voix sont transmis avec la priorité la plus élevée dans les commutateurs, les ponts et les routeurs, parce que les paquets de voix ne peuvent pas supporter de trop longs délais de transmission.

Ces réseaux virtuels dédiés à la téléphonie ont deux inconvénients :
- En cas d'accident majeur, de nombreux usagers établissent simultanément des appels téléphoniques qui ne sont pas tous des appels vers un centre d'appels d'urgence. Les appels qui ne sont pas destinés au centre d'appels d'urgence peuvent saturer le réseau local, au détriment des appels destinés au centre d'appels d'urgence.
- Les demandes d'appels d'urgence qui sont faites par d'autres moyens, utilisant la transmission de données sur le réseau local, n'ont aucune priorité par rapport à la transmission de données ordinaires : Une personne sourde et muette utilisera le service de causette (« chat» en anglais) ou un service multimédia adapté à son handicap (par exemple un service de messagerie instantanée) pour appeler un centre d'appels d'urgence. Il faudrait que son appel d'urgence bénéficie aussi d'une priorité par rapport aux transferts de données ordinaires, et par rapport aux appels téléphoniques non urgents.

Une nouvelle réglementation aux USA et bientôt en Europe imposera de traiter de manière encore plus particulière les appels d'urgence transmis dans un réseau de télécommunication d'entreprise :
- Un appel d'urgence doit être routé automatiquement vers un centre d'appels d'urgence qui est fonction de la localisation et de l'activité professionnelle de l'usager qui appelle.
- Un appel d'urgence doit être transmis avec une priorité supérieure à celle des autres appel téléphoniques.
- La connexion doit être maintenue même si l'usager raccroche, et jusqu'à ce que le centre d'appels d'urgence libère la connexion.
- Le numéro et la localisation précise du terminal appelant doivent être transmis au centre d'appels d'urgence.
- Une notification doit être transmise en outre à divers dispositifs d'alarme propres à l'entreprise, par exemple une sirène, des lampes clignotantes, un poste téléphonique particulier, etc....

For exemple, le document US 2002/0085538 révèle la mise en oeuvre d'un appel d'urgence avec un terminal VOIP dans un environment de VLAN.

Les réseau locaux informatiques actuels qui supportent des communications téléphoniques ne sont pas adaptés pour satisfaire toutes les exigences de cette réglementation. En particulier, ils ne sont pas adaptés pour qu'un appel d'urgence soit établi avec une priorité supérieure à celle des autres appel téléphoniques.

Un premier but de l'invention est de proposer un réseau local informatique adapté pour établir un appel d'urgence en satisfaisant notamment cette exigence de la nouvelle réglementation. Cet appel d'urgence est généralement un appel téléphonique, mais il peut être aussi un échange de données par un protocole de causette, de messagerie instantanée, ou de signalisation quelconque (par exemple indiquant que quelqu'un a pressé un bouton dédié à une alarme).

Un premier objet de l'invention est un procédé pour établir un appel d'urgence dans réseau local informatique, caractérisé en ce que, lorsqu'un terminal demande l'établissement d'un appel d'urgence, il consiste à :
- attribuer ce terminal à un premier réseau virtuel ayant une priorité supérieure à celle de tout réseau virtuel auquel est attribué un terminal qui demande l'établissement d'un appel non urgent ; et acheminer au moins un message de ce terminal vers un centre appels d'urgence via ce premier réseau virtuel ;
- attribuer ce terminal à un second réseau virtuel ayant une priorité supérieure à celle de tout réseau virtuel auquel est attribué un terminal qui demande l'établissement d'un appel non urgent, et acheminer au moins un message de ce centre appels d'urgence vers ce terminal via ce second réseau virtuel.

Le procédé ainsi caractérisé permet à un terminal de faire parvenir une demande d'établissement d'appel à un centre d'appels d'urgence, sans que cette demande puisse être bloquée par toute autre demande d'établissement d'appel non urgent, ou tout autre appel non urgent déjà établi, parce que ce terminal est alors attribué à un premier réseau virtuel ayant une priorité supérieure à celle de tout autre réseau virtuel auquel est attribué un terminal qui demande l'établissement d'un appel non urgent.

Le centre appels d'urgence fait parvenir une réponse à un terminal sans que cette réponse puisse être bloquée par tout autre appel non urgent, parce que ce terminal est alors attribué à un second réseau virtuel ayant une priorité supérieure à celle de tout autre réseau virtuel auquel est attribué un terminal qui demande l'établissement d'un appel non urgent.

Dans l'exemple d'un réseau local de type Ethernet, un mécanisme classique de définition de réseaux locaux virtuels et de priorité est mis en oeuvre dans des commutateurs qui constituent des noeuds du réseau local. Une configuration est faite une fois pour toutes sur ces commutateurs pour qu'ils donnent la priorité maximale à ces deux réseaux virtuels.

Un second but de l'invention est de permettre à un terminal de notifier un appel d'urgence à divers dispositifs d'alarme, par des moyens simples.

Pour acheminer au moins un message de ce terminal vers un centre appels d'urgence via ce premier réseau virtuel), le procédé selon l'invention consiste à utiliser le mode de diffusion ; et pour acheminer un message de ce centre appels d'urgence vers ce terminal via ce second réseau virtuel, il consiste à utiliser le mode point à point.

La séparation entre ce premier et ce second réseau virtuel permet d'utiliser le mode diffusion (« broadcast » en anglais), pour la transmission entre un terminal et tous les autres équipements du réseau, notamment des dispositifs d'alarme, sans risquer de perturber d'autres terminaux. Le mode diffusion a pour avantage d'acheminer un message simultanément vers plusieurs équipement destinataires sans que le terminal émetteur ait à connaître leurs adresses respectives. Le message de signalisation contient une adresse particulière dite de diffusion (en anglais « broadcast address ») permettant d'atteindre tout équipement qui appartient au premier réseau virtuel. Le serveur appels d'urgence, et les dispositifs d'alarme sont les seuls équipements à appartenir au premier réseau virtuel, en plus du terminal qui est en train de demander l'établissement d'un appel d'urgence. Les autres terminaux téléphoniques ne reçoivent donc pas les messages de signalisation, ni les paquets de voix émis par ce terminal, puisque ces autres terminaux téléphoniques n'appartiennent pas au premier réseau virtuel. Le réseau les empêche de recevoir les messages de signalisation et les paquets de voix portant l'identité du premier réseau virtuel, puisque les adresses physiques de ces terminaux ne sont pas associées à cette identité de réseau virtuel dans les tables de routage des noeuds du réseau.

Le mode point à point (en anglais « unicast mode ») permet d'acheminer un message d'un centre appels d'urgence vers un seul terminal qui est celui ayant demandé l'établissement d'un appel d'urgence, sans que d'autres terminaux, eux mêmes en communication avec un centre d'appels d'urgence, et appartenant aussi à ce second réseau virtuel, reçoivent des messages et des paquets qui ne leur seraient pas destinés, grâce au fait que les paquets de voix provenant du centre d'appels sont acheminés en mode point à point dans le second réseau virtuel. Le mode diffusion est distingué du mot point à point par l'utilisation d'une valeur d'adresse physique particulière.

L'invention a aussi pour objet un terminal, un serveur d'appels d'urgence, et une passerelle adaptés pour la mise en oeuvre du procédé selon l'invention.

L'invention sera mieux comprise et d'autres caractéristiques apparaîtront à l'aide de la description ci-dessous et des figures l'accompagnant :
- La figure 1 représente un exemple de réalisation du réseau local informatique selon l'invention.
- La figure 2 illustre le fonctionnement de cet exemple, en montrant les échanges de messages de signalisation et de paquets de voix.

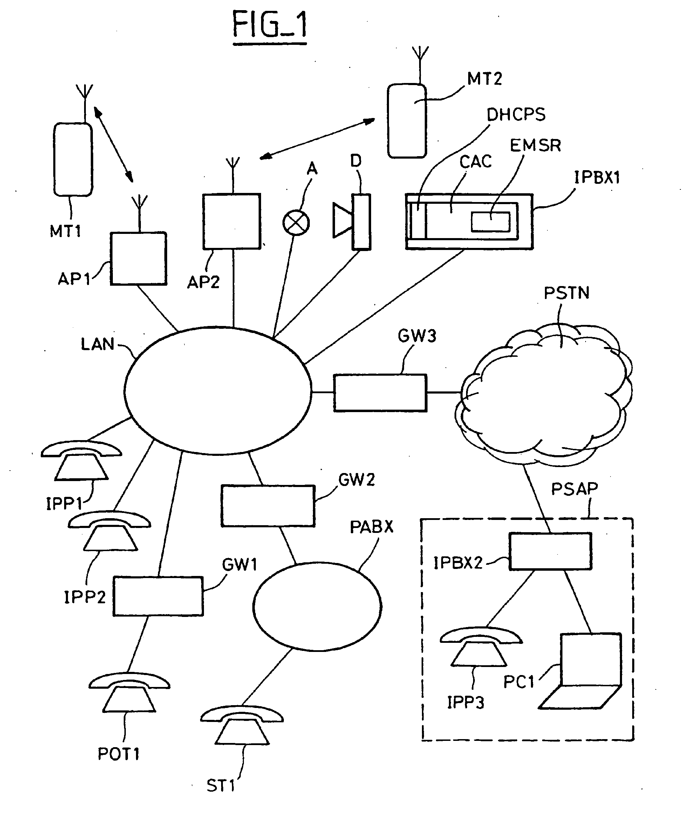

Comme représenté sur la **figure 1****,** cet exemple de réalisation comporte principalement un réseau local informatique LAN qui est préférentiellement de type Ethernet au niveau liaison et de type TCP/IP aux niveaux transport/réseau. Un commutateur téléphonique IPBX est relié à ce réseau local LAN pour commuter des connexions téléphoniques. Divers types de terminal téléphonique sont reliés à ce réseau local LAN, directement ou indirectement :
- Des terminaux téléphoniques fixes, IPP1, IPP2, de type de type Voix sur Protocole Internet (VOIP ou Voice over IP en anglais) qui émettent des signaux de voix sous la forme de paquets Internet, et sont reliés directement au réseau local LAN.
- Des terminaux téléphoniques mobiles, de type Wifi par exemple, MT1, MT2 sont reliés au réseau local LAN, via des point d'accès radio Wifi classiques AP1, AP2.
- Des terminaux téléphoniques fixes analogiques, tel que le terminal POT1, sont reliés au réseau local LAN, via une passerelle GW1 classique, permettant de numériser, comprimer, et mettre sous forme de paquets Internet, des signaux de voix analogiques, et vice versa.
- Des terminaux téléphoniques fixes numériques synchrones, tel que le terminal ST1, sont reliés à un commutateur numérique synchrone PABX1 qui est lui-même relié au réseau local LAN, via une passerelle GW2 classique permettant de numériser, comprimer, et mettre sous forme de paquets Internet, des signaux de voix numériques synchrones, et vice versa.

Ce réseau local LAN est relié à un centre d'appels d'urgence PSAP, via une passerelle GW3, et un réseau de téléphonie public PSTN, de type numérique synchrone dans cet exemple. Dans d'autres exemples, le réseau Internet peut être utilisé pour relier ce réseau local au centre d'appels d'urgence.

Le centre d'appels d'urgence PSAP est un centre d'appels, classique, qui comporte : un commutateur téléphonique IPBX2 de type Voix sur Protocole Internet ; des terminaux téléphoniques de type Voix sur Protocole Internet tels que le terminal IPP3 ; et des ordinateurs tels que PC1. Des dispositifs d'alarmes AD (Sirène et lampes clignotantes) sont reliés au réseau local LAN pour alerter le personnel de l'entreprise.

L'autocommutateur IPBX1 comporte des moyens logiciels de contrôle d'admission appels, CAC, pour traiter les demandes d'établissement appels. Ces moyens CAC comportent un sous-ensemble EMSR qui est un serveur appels d'urgence. Ce serveur peut avoir aussi la fonction de localisation, laquelle est indépendante du procédé selon l'invention. Dans cet exemple, les moyens logiciels CAC et EMSR, sont intégrés à l'autocommutateur IPBX1 mais ils pourraient aussi être localisées dans des équipements différents, et dans ce cas là ils dialogueraient entre eux à travers le réseau local LAN. Ce réseau local LAN supporte plusieurs réseaux virtuels et en particulier un ou plusieurs réseaux virtuels dédiés aux appels téléphoniques non urgents.

Pour exploiter des réseaux virtuels, un pont ou un routeur doit pouvoir distinguer, chaque fois qu'il reçoit un paquet, à quel réseau virtuel appartient ce paquet, et à que quel réseau virtuel appartient la machine destinataire du paquet, cette machine destinataire étant connue par son adresse physique placée dans le paquet.

Lorsqu'une nouvelle machine est connectée à ce réseau local LAN comportant plusieurs réseaux virtuels, il est nécessaire d'attribuer à cette machine une adresse Internet et un identifiant de réseau virtuel. Un protocole connu, appelé protocole de configuration dynamique d'un hôte, ou DHCP (« Dynamic Host Configuration Protocole »), permet d'initialiser et configurer dynamiquement une machine nouvellement connectée à ce réseau. Ce protocole est mis en oeuvre en exécutant un logiciel serveur DHCPS sur l'une des machines du réseau, appelée serveur, et en exécutant des logiciels clients appelés clients DHCP respectivement dans les autres machines du réseau. Par exemple le serveur DHCPS est intégré à l'autocommutateur IPBX1.

Lorsqu'une machine est mise en fonctionnement dans ce réseau LAN, son client DHCP diffuse dans tout ou partie du réseau un paquet contenant une requête dite DHCP, qui signale au serveur DHCPS la présence de cette nouvelle machine. Le serveur DHCPS choisit une adresse Internet parmi les adresses non attribuées, dans un lot d'adresses prédéterminé. Le serveur DHCPS fournit cette adresse à cette machine pour une durée prédéterminée. Après ce délais, cette adresse est considérée comme libre par le serveur. Il la réutilise pour une autre machine si la machine considérée n'a pas envoyé de message au serveur DHCPS, entre temps, pour demander de nouveau l'attribution d'une adresse Internet.

Conformément au document IETF RFC 2131, le protocole DHCP fournit à chaque machine :
- une référence de transaction,
- une adresse Internet,
- une information de durée d'attribution de cette adresse Internet,
- l'adresse Internet du prochain serveur à utiliser pour l'amorçage de la machine,
- et un champ de paramètres optionnels.

On connaît divers procédés pour attribuer un identifiant de réseau virtuel. Un premier procédé automatique connu consiste à utiliser le protocole LLDP (Logical Link Discovery Protocol, IEEE 802.1ab). Un autre procédé automatique s'appuie sur un serveur DHCPS et est décrit dans le document EP1418733. Il consiste à :
- diffuser dans tout le réseau, à partir du terminal, un message contenant :
   -- des informations sur ce terminal ;
   -- une requête destinée au serveur DHCPS et demandant notamment l'attribution d' un identifiant de réseau virtuel, pour ce terminal ;
- et déduire, dans le serveur DHCPS, un identifiant de réseau virtuel notamment à partir des informations sur ce terminal, et envoyer cet identifiant de réseau virtuel au terminal.

Ce dernier procédé simplifie la procédure d'installation d'une nouvelle machine puisque c'est le serveur DHCPS qui détermine automatiquement et fournit à la nouvelle machine un identifiant de réseau virtuel. Cet identifiant est déduit des informations sur le terminal, qui sont contenues dans le message diffusé par le terminal. Par exemple si c'est un terminal du type téléphone sur protocole Internet, un identifiant de réseau virtuel voix lui est attribué.

Selon un mode de mise en oeuvre particulier, le message comprend en outre une requête destinée au noeud de rattachement du terminal, et demandant à ce noeud de fournir des indications sur le port, de ce noeud, qui est connecté à ce terminal, en rajoutant ces indications à ce message . Dans le serveur DHCPS de configuration dynamique d'un hôte, un identifiant de réseau virtuel est déduit de ces indications sur le port, et de ces informations sur ce terminal.

Dans le réseau LAN considéré à titre d'exemple, le serveur DHCPS, intégré à l'autocommutateur IPBX1, attribue une identité de réseau virtuel de voix à chaque terminal téléphonique IPP1, IPP2, pour les communications téléphoniques non urgentes, ce serveur détectant automatiquement qu'il s'agit d'un terminal téléphonique grâce à une indication que le terminal met dans son premier message, au démarrage.

Lorsqu'un utilisateur compose un numéro d'urgence sur le terminal IPP1, des moyens logiciels exécutés dans ce terminal IPP1 reconnaissent ce numéro d'urgence et fournissent à ce terminal deux identités de réseau virtuel :
- Une première identité de réseau virtuel, VLAN1, qu'il utilisera pour l'émission des messages de signalisation et des paquets de voix, à destination d'un centre d'appels d'urgence, ce réseau virtuel VLAN1 ayant une priorité supérieure à celle des réseaux virtuels de voix pour les appels non urgents.
- Une seconde identité de réseau virtuel, VLAN2, qu'il utilisera pour recevoir des messages de signalisation et des paquets de voix, en provenance d'un centre d'appels d'urgence, PSAP, ce réseau virtuel VLAN2 ayant une priorité supérieure à celle des réseaux virtuels de voix pour les appels non urgents. Il rejettera les messages qui ne contiendront pas cette identité de réseau virtuel VLAN2.

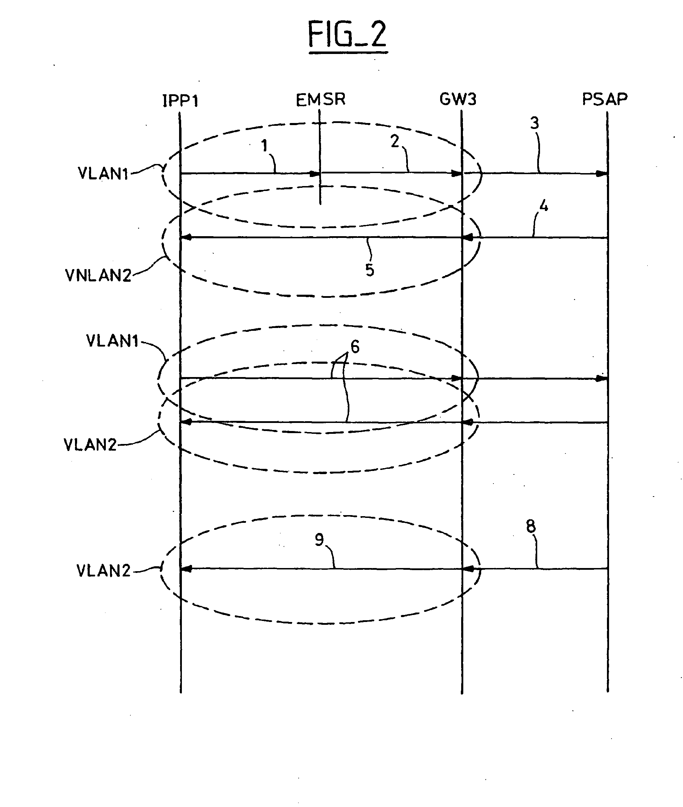

La **figure 2** illustre le fonctionnement de cet exemple de réseau local LAN, en montrant les échanges de messages de signalisation et de paquets de voix, dans le cas où le terminal IPP1 demande l'établissement d'un appel d'urgence :
- Etape 1 : Le terminal IPPI détecte qu'un numéro d'urgence a été composé par l'utilisateur de ce terminal. Il émet un message de signalisation comportant :
   -- l'adresse du niveau Contrôle d'Accès au Médium (MAC, ou Medium Access Control en anglais) du terminal ,
   -- l'identifiant du réseau virtuel VLAN1, qui lui assure une priorité maximale pour être transféré ,
   -- et une adresse MAC de mode diffusion, qui indique que le message est destiné à tous les équipements raccordés au réseau virtuel VLAN1 (Le terminal IPP1 n'a donc pas besoin de connaître l'adresse Ethernet du serveur appels d'urgence EMSR, ni celles des dispositifs d'alarme AD).
- Etape 2 : Comme tous les équipements appartenant au réseau virtuel VLAN1, et notamment les dispositifs d'alarme AD, le serveur d'appels d'urgence EMSR reçoit le message de signalisation. L'identité du réseau virtuel VLAN1, qu'il contient, indique que c'est un appel d'urgence. Le serveur d'appels d'urgence EMSR détermine alors, en fonction de la localisation du terminal IPP1, l'identité d'un centre d'appels d'urgence PSAP qui doit être appelé. Le serveur EMSR envoie ensuite un nouveau message de signalisation à la passerelle GW3 qui permet d'accéder au centre d'appels d'urgence PSAP. Ce message contient :
   -- l'identité VLAN1, qui lui assure une priorité maximale pour être transféré,
   -- l'adresse MAC du terminal IPP1,
   -- et une demande d'établissement d'appels entre le terminal IPP1 et le centre d'appels d'urgence PSAP.
- Etape 3 : La passerelle GW3 établit une session entre le terminal IPPI et le centre d'appels PSAP.
- Etape 4 : Le centre d'appels PSAP envoie un accusé de réception à destination de la passerelle GW3.
- Etape 5 : La passerelle GW3 envoie un accusé de réception à destination du terminal IPP1 via le réseau virtuel VLAN2, en utilisant pour le joindre : son adresse MAC et l'identité de réseau virtuel VLAN2. Cet accusé de réception bénéficie de la priorité la plus haute puisqu'il est transféré via le réseau virtuel VLAN2. Cet accusé de réception arrive au terminal IPP1, et à lui seul parce qu'il porte son adresse MAC , ce qui permet une transmission en mode point à point.
- Etape 6 : Une communication téléphonique est établie entre le terminal IPP1 et le centre d'appels PSAP : le terminal IPP1 initialise le transfert de la voix dans un canal utilisant le Protocole de Transport en Temps Réel RTP (Real Time Protocol). Des paquets transportant la voix sont émis en mode diffusion par le terminal IPP1 dans le réseau virtuel VLAN1. La passerelle GW3 utilise l'adresse MAC du terminal IPP1 contenue dans les paquets émis en mode diffusion transportant la voix pour affecter ces paquets à la communication d'urgence correspondante en cas d'appels d'urgence multiples. Des paquets transportant la voix, en provenance du centre d'appels PSAP, sont émis en mode point à point par la passerelle GW3 dans le réseau virtuel VLAN2. La passerelle GW3 assure le transcodage des paquets de voix du canal RTP vers le format adapté au réseau public (par exemple des canaux synchrones, à 64 Kbps, si c'est un réseau numérique à intégration de services), et vice versa.
- Etape 8 : A la fin de l'appel d'urgence, c'est le centre d'appels d'urgence PSAP qui termine l'appel, en envoyant un message de signalisation à la passerelle GW3. Ce message provoque la libération des ressources utilisées dans la passerelle GW3 pour cet appel.
- Etape 9 : La passerelle GW3 transmet un message de relâchement au terminal IPP1, en utilisant son adresse MAC et l'identité de réseau virtuel VLAN2. Ce message a pour effet d'annuler l'attribution du terminal IPP1 aux réseaux virtuels VLAN1 et VLAN2. Il reste attribué à un réseau virtuel de voix pour appels non urgents, et peut donc émettre ou recevoir des appels ordinaires.

Selon une variante de mise en oeuvre, le serveur d'appels d'urgence EMSR établit, en plus de la connexion avec le PSAP, une connexion entre le terminal IPP1 désigné par l'adresse MAC d'origine, que contient le message de notification, et un autre terminal prédéterminé du réseau d'entreprise, par exemple POT1. Ce terminal, dit tiers, est par exemple un terminal téléphonique situé dans un poste de gardiennage de l'entreprise.

A cause de la diversité des types de terminal téléphonique qui peuvent être présents dans un réseau téléphonique, il est prévu que les passerelles GW1 et GW2 remplissent les fonctions que les terminaux analogiques, tels que POT1, et les terminaux synchrones, tels que ST1, ne peuvent pas remplir, pour établir des appels dans le réseau local LAN. Par exemple, la passerelle GW1 comporte des moyens logiciels pour :
- reconnaître qu'un message de signalisation émis par le terminal POT1 est un message de demande l'établissement d'un appel d'urgence, et retransmettre ce message en mode diffusion dans le réseau local LAN en ajoutant à ce message une étiquette constituée de l'identificateur de réseau virtuel VLAN 1 ;
- étiqueter tous les paquets de données provenant de ce terminal POT1, avec l'identité du premier réseau virtuel VLAN1, pendant la durée d'un appel d'urgence ;
- et retransmettre à ce terminal POT1 tout message portant une adresse MAC correspondant à ce terminal POT1, et portant l'identificateur de réseau virtuel VLAN2 ; et ne laissant pas passer ceux qui ne portent pas l'identité du second réseau virtuel VLAN2, pendant la durée de l'appel d'urgence.

D'autres types de terminaux, des terminaux de données ou multimédia ne comportant pas de fonction de transmission de la voix peuvent être utilisés par des utilisateurs handicapés pour appeler un centre d'appels d'urgence, par exemple une personne sourde et muette. Ces terminaux comprennent une application adaptée à la communication de données, et, tout comme le terminal vocal IPP1, ces terminaux de données comprennent des moyens leur permettant de déterminer si l'utilisateur appelle ou non un centre d'appels d'urgence, et pour attribuer ces terminaux aux premier et second réseaux virtuels VLAN1 et VLAN2 pour transporter des données autres que des paquets de voix.

## Revendications

1. Procédé pour établir un appel d'urgence dans réseau local informatique (LAN) ; **caractérisé en ce que**, lorsqu'un terminal (IPP1) demande l'établissement d'un appel d'urgence, il consiste à:
- attribuer ce terminal a un premier réseau virtuel (VLANT) ayant une priorité supérieure à celle de tout réseau virtuel auquel est attribué un terminal qui demande l'établissement d'un appel non urgent ; et acheminer (1) au moins un message de ce terminal vers un centre appels d'urgence (PSAP) via ce premier réseau virtuel (VLAN1) ;
- attribuer ce terminal à un second réseau virtuel (VLAN2) ayant une priorité supérieure à celle de tout réseau virtuel auquel est attribué un terminal qui demande l'établissement d'un appel non urgent, et acheminer (5) au moins un message de ce centre appels d'urgence (PSAP) vers ce terminal (IPP1) vio ce second réseau virtuel) (VLAN2).

2. Procédé selon la revendication 1, **caractérisé en ce que** pour acheminer (1) au moins un message de ce terminal vers un centre appels d'urgence (PSAP) via ce premier réseau virtuel (VLAN1), il consiste à utiliser le mode de diffusion ; et **en ce que** pour acheminer (5) un message de ce centre appels d'urgence (PSAP) vers ce terminal (IPP1) via ce second réseau virtuel (VLAN2), il consiste à utiliser le mode point à point.

3. Terminal téléphonique (IPP1) de type Internet, **caractérisé en ce qu'**il comporte des moyens pour attribuer ce terminal à un premier réseau virtuel (VLAN1) et à un second réseau virtuel (VLAN2) lorsque ce terminal demande l'établissement d'un appel d'urgence, ces deux réseaux virtuels ayant chacun une priorité supérieure à celle de tout réseau virtuel auquel est attribué un terminal qui demande l'établissement d'un appel non urgent, des moyens pour émettre au moins un message vers un centre d'appels d'urgence (PSPAP) via le premier réseau virtuel (VLAN1), et des moyens pour recevoir au moins un message de ce centre d'appel d'urgence (PSAP) via le second réseau virtuel (VLAN2).

4. Terminal selon la revendication 3, **caractérisé en ce qu'**il comporte en outre :
- des moyens pour émettre des paquets de données portant un identificateur de ce premier réseau virtuel, et un indicateur de mode diffusion ;
- et des moyens pour recevoir des paquets de données portant un identificateur de ce second réseau virtuel et un indicateur de mode point à point.

5. Passerelle (GW1) permettant de relier un terminal téléphonique (POT1) analogique (POT1) ou numérique synchrone (ST1) à un réseau local (LAN) de type Internet, fournissant un service de téléphonie; **caractérisée en ce qu'**elle comporte des moyens pour, lorsque ce terminal téléphonique émet un message de demande l'établissement d'un appel d'urgence,
- reconnaître que ce message demande l'établissement d'un appel d'urgence, et retransmettre ce message en mode diffusion dons le réseau local (LAN) en ajoutant à ce message un identificateur dé réseau virtuel correspondant à premier réseau virtuel (VLAN1) ayant une priorité supérieure à celle de tout réseau virtuel auquel est attribué un terminal qui demande l'établissement d'un appel non urgent ;
- ajouter à tout message provenant de ce terminal (POT1) un identificateur de réseau virtuel correspondant au premier réseau virtuel (VLAN1), pendant la durée de l'appel d'urgence ;
- et retransmettre à ce terminal (POT1) tout message portant une adresse correspondant à ce terminal, et portant un identificateur de réseau virtuel correspondant à un second réseau virtuel (VLAN2), ce second réseau virtuel ayant une priorité supérieure à celle de tout réseau virtuel auquel est attribué un terminal qui demande l'etablissement d'un appel non urgent.

6. Serveur appels d'urgence (EMSR), pour élablir un appel d'urgence entre un terminal (IPP1, POT1, ST1, MT1) et un centre appels d'urgence (PSAP) via un réseau local informatique (LAN) ; **caractérisé en ce qu'**il comporte :
- des moyens pour recevoir un message provenant d'un terminal et contenant un indicateur de mode diffusion, puis reconnaître qu'il contient un identificateur de réseau virtuel correspondant à un réseau virtuel (VLAN1) dédié à la transmission de messages qui demandent l'établissement d'un appel urgent ;
- des moyens pour déterminer ensuite un centre appels d'urgence (PSAP) en fonction de la localisation de ce terminal ;
- et des moyens pour émettre ensuite un message adressé à ce centre appels d'urgence, pour demander l'établissement d'un appel entre ce terminal et le centre appels d'urgence, ce message contenant un identificateur de réseau virtuel correspondant au réseau virtuel (VLAN1) dédié à la transmission de messages qui demandent l'établissement d'un appel urgent.

7. Passerelle (GW3) permettant de relier un terminal (IPP1) à un centre d'appels d'urgence (PSAP) au cours d'une communication ; **caractérisée en ce qu'**elle comporte des moyens pour
- acheminer (3) vers le centre d'appels d'urgence ou moins un message reçu du terminal, en mode diffusion via un premier réseau virtuel (VLAN1);
- et acheminer (5) vers le terminal, en mode point à point via un second réseau virtuel (VLAN2), au moins un message reçu du centre d'appels d'urgence.

## Claims

1. A method for establishing an emergency call within a local area network (LAN); **characterized in that**, whenever a terminal (IPP1) requests the establishment of an emergency call, the method consists of:
- assigning said terminal to a first virtual network (VLAN1) having a priority greater than that of any virtual network to which a terminal requesting the establishment of a non-emergency call is assigned; and routing (1) at least one message from said terminal to an emergency call center (PSAP) via said first virtual network (VLAN1);
- assigning said terminal to a second virtual network (VLAN2) having a priority greater than that of any virtual network to which to which a terminal requesting the establishment of a non-emergency call is assigned; and routing (5) at least one message from said terminal to an emergency call center (PSAP) via said second virtual network (VLAN2).

2. A method according to claim 1, **characterized in that** when routing (1) at least one message from said terminal to an emergency call center (PSAP) via said first virtual network (VLAN1), the method consists of using broadcast mode; and **in that** when routing (5) at least one message from an emergency call center (PSAP) to said terminal (IPP1) via said second virtual network (VLAN2), the method consists of using peer-to-peer mode.

3. An Internet-based telephone terminal (IPP1), **characterized in that** it comprises means for assigning said terminal to a first virtual network (VLAN1) and to a second virtual network (VLAN2) whenever said terminal requests the establishment of an emergency call, said two virtual terminals each having a priority greater than that of any network to which a terminal requesting the establishment of a non-emergency call is assigned; means for sending at least one message to an emergency call center (PSAP) via the first virtual network (VLAN1); and means for receiving at least one message from an emergency call center (PSAP) via said second virtual network (VLAN2).

4. A terminal according to claim 3, **characterized in that** it further comprises:
- means for sending data packets bearing an identifier for said first virtual network, and a broadcast mode indicator;
- and means for receiving data bearding an identifier for said second virtual network and a peer-to-peer mode indicator.

5. A gateway (GW1) making it possible to connect an analog telephony terminal (POT1) or synchronous digital telephone terminal (ST1) to an Internet local area network (LAN), providing a telephony service; **characterized in that** it comprises means for, whenever said telephone terminal sends a message requesting the establishment of an emergency call:
- recognizing that said message is requesting the establishment of an emergency call, and retransmit said message in broadcast mode over the local area network (LAN), adding to this message a virtual network identifier corresponding to the first virtual network (VLAN1) having a priority greater than that of any virtual network to which a terminal requesting the establishment of a non-urgent call is assigned;
- adding a virtual network identifier corresponding to the first virtual network (VLAN1) to any message arriving from said terminal (POT1), for the duration of the emergency call;
- and sending back to said terminal (POT1) any message bearing an address corresponding to said terminal, and bearing a virtual network identifier corresponding to the second virtual network (VLAN2), said second virtual network having a priority greater than that of any virtual network to which a terminal requesting the establishment of a non-urgent call is assigned;

6. An emergency call server (EMSR), for establishing an emergency call between a terminal (IPP1, POT1, ST1, MT1) and an emergency call center (PSAP) via a local area network (LAN): **characterized in that** it comprises:
- means for receiving a message coming from a terminal and containing a broadcast mode indicator, then recognizing that it contains a virtual network identifier corresponding to a virtual area network (VLAN1) dedicated to transmitting messages which request the establishment of an urgent call;
- means for then selecting an emergency call center (PSAP) based on the location of said terminal;
- and means for then sending a message addressed to said emergency call center, requesting the establishment of a call between said terminal and the emergency call center, said message containing a virtual network identifier corresponding to the virtual area network (VLAN1) dedicated to transmitting messages which request the establishment of an urgent call.

7. A gateway (GW3) making it possible to connect a terminal (IPP1) to an emergency call center (PSAP) during communication, **characterized in that** it comprises means for:
- routing (3) at least one message received from the terminal to the emergency call center, in broadcast mode, via a first virtual network (VLAN1);
- and routing (5) at least one message received from the emergency call center to the terminal, in peer-to-peer mode, via a second virtual network (VLAN2).

## Patentansprüche

1. Verfahren zum Herstellen einer Notrufverbindung in einem lokalen Informatiknetz (LAN); **dadurch gekennzeichnet, dass**; wenn ein Endgerät (IPP1) das Herstellen einer Notrufverbindung anfordert, das Verfahren darin besteht:
- dieses Endgerät einem ersten virtuellen Netz (VLAN1) zuzuweisen, dessen Priorität höher ist als die Priorität jedes virtuellen Netzes, dem ein Endgerät zugeordnet ist, welches das Herstellen einer nicht dringenden Rufverbindung anfordert; und über dieses erste virtuelle Netz (VLAN1) mindestens eine Nachricht dieses Endgeräts an eine Notrufzentrale (PSAP) zu Übertragen (1);
- dieses Endgerät einem zweiten virtuellen Netz (VLAN2) zuzuweisen, dessen Priorität höher ist als die Priorität jedes virtuellen Netzes, dem ein Endgerät zugeordnet ist, welches das herstellen einer nicht dringenden Rufverbindung anfordert, und über dieses zweite virtuelle Netz (VLAN2) mindestens eine Nachricht dieser Notrufzentrale (PSAP) an dieses Endgerät (IPP1) zu übertragen (5);

2. Verfahren nach Anspruch 1 **dadurch gekennzeichnet, dass** es darin besteht, für die Übertragung (1) von mindestens einer Nachricht von diesem Endgerät an eine Notrufzentrale (PSAP) über dieses erste virtuelle Netz (VLAN1) einen Diffusionsnsmodus zu benutzen, und darin, dass es für die Übertragung (5) einer Nachricht von dieser Notrufzentrale (PSAP) an dieses Endgerät (IPP1) über dieses zweite virtuelle Netz (VLAN2) einen Punkt-zu-Punkt-Modus benutzt.

3. Telefon-Endgerät (IPP1) vom Typ Internet, **dadurch gekennzeichnet, dass** es Mittel zum Zuweisen dieses Endgeräts an ein erstes virtuelles Netz (VLAN1) und an ein zweites virtuelles Netz (VLAN2), wenn dieses Endgerät das Herstellen eineir Notrufverbindung anfordert, umfasst, wobei diese beiden virtuellen Netze jeweils eine Priorität haben, die höher ist als die Priorität jedes virtuellen Netzes, welchem ein Endgerät, das eine nicht dringende Rufverbindung anfordert, zugewiesen ist, sowie Mittel zum Senden von mindestens einer Nachricht an eine Notrufzentrale (PSAP) über das erste virtuelle Netz (VLAN1), und Mittel zum Empfangen von mindestens einer Nachricht von der Notrufzentrale (PSAP) über das zweite virtuelle Netz (VLAN2).

4. Endgerät nach Anspruch 3, **dadurch gekennzeichnet, dass** es weiterhin umfasst:
- Mittel zum Senden von Datenpaketen, welche mit einer Kennung dieses ersten virtuellen und einen Diffusionsmodus-Indikator Netzes versehen sind;
- und Mittel zum Empfangen von Datenpaketen, welche mit einer Kennung dieses ersten virtuellen Netzes und einem Punkt-zu-Punkt-Modus-Indikator versehen sind.

5. Gateway (GW1) zum Verbinden eines analogen (POT1) oder synchronen digitalen (ST1) Telefon-Endgeräts (POT1) mit einem lokalen Netz (LAN) vom Typ Internet welches einen Telefondienst anbietet; **dadurch gekennzeichnet, dass** es Mittel umfasst, welche, wenn dieses Telefon-Endgerät eine Nachricht mit einer Anforderung für die Herstellung eines Notrufs sendet, fähig sind,
- zu erkennen, dass diese Nachricht das Herstellen einer Notrufverbindung anfordert und dass diese Nachricht im lokalen Netz (LAN) im Diffusionsmodus unter Hinzufügen zu dieser Nachricht einer Kennung des virtuellen Netzes, welches dem ersten virtuellen Netz (VLAN1) entspricht, dessen Priorität höher ist als die Priorität jedes virtuellen Netzes, welchem ein Endgerät zugeordnet ist, welches das Herstellen einer nicht dringenden Rufverbindung anfordert, hat, weiterzuleiten ist;
- jeder von diesem Endgerät (POT1) kommenden Nachricht eine Kennung des virtuellen Netzes, welches dem ersten virtuellen Netz (VLAN1) entspricht, für die Dauer der Notrufverbindung hinzuzufügen;
- und jede Nachricht, welche eine diesem Endgerät entsprechende Adresse sowie eine Kennung des virtuellen Netzes, welches einem zweiten virtuellen Netz (VLAN2) entspricht, wobei dieses zweite virtuelle Netz eine höhere Priorität hat als jedes virtuelle Netz, dem ein Endgerät zugewiesen ist, welches das Herstellen einer nicht dringenden Rufverbindung anfordert, enthält, an dieses Endgerät (POT1) weiterzuleiten.

6. Notruf-Server (EMSR) zum Herstellen einer Notrufverbindung zwischen einem Endgerät (IPPI, POTI, STI, MTI) und einer Notrufzentrale (PSAP) über ein lokales informatisches Netz (LAN); **dadurch gekennzeichnet, dass** es umfasst:
- Mittel zum Empfangen einer Nachricht von einem Endgerät, welche eine Kennung des Diffusionsmodus enthält, und zum Erkennen, dass sie eine Kennung eines virtuellen Netzes, welches einem der Übertragung von Nachrichten, die das Herstellen einer dringenden Rufverbindung anfordern, zugewiesenen virtuellen Netz (VLAN1) entspricht, enthält;
- Mittel zum anschließenden Ermitteln einer Notrufzentrale (PSAP) gemäß dem Standort dieses Endgeräts;
- und Mittel zum anschließenden Senden einer Nachricht an diese Notrufzentrale, um das Herstellen einer Rufverbindung zwischen diesem Endgerät und der Notrufzentrale anzufordern, wobei diese Nachricht eine Kennung des virtuellen Netzes, welches dem der Übertragung von Nachrichten, die das Herstellen einer dringenden Rufverbindung anfordern, zugeordneten virtuellen Netz (VLAN1) entspricht, enthält.

7. Gateway (GW3) zum Verbinden dieses Endgeräts (IPP1), mit einer Notrufzentrale (PSAP) während einer bestehenden Rufverbindung; **dadurch gekennzeichnet, dass** es Mittel umfasst, um
- mindestens eine vom Endgerät empfangene Nachricht im Diffusionsmodus über ein erstes virtuelles Netz (VLAN1) on die Notrufzentrale zu übertragen (3);
- und mindestens eine von der Notrufzentrale empfangene Nachricht im Punkt-zu-Punkt-Modus über ein zweites virtuelles Netz (VLAN2), an dieses Endgerät zu Übertragen (5).
